# EUROPEAN PATENT SPECIFICATION

(11) **EP 1 063 136 B1**
(45) Date of publication and mention of the grant of the patent: **01.09.2004**
(21) Application number: 00305165.3
(22) Date of filing: 19.06.2000
(51) Int. Cl.: B60S 1/32

(54) **Wiper arm**
Wischerarm
Bras d'essuie-glace

(30) Priority: 25.06.1999 JP 18007999
(43) Date of publication of application: 27.12.2000
(73) Proprietor: Mitsuba Corporation, Kiryu-shi, Gunma-ken (JP)
(72) Inventor: Igarashi, Yuji, Ohta-shi, Gunma-ken (JP)
(74) Representative: Smith, Norman Ian

(56) References cited:
- DE-A- 19 651 856
- DE-A- 19 735 301
- US-A- 4 133 071
- US-A- 5 724 699

## Description

### BACKGROUND OF THE INVENTION

### 1. Field of the Invention

The present invention relates to a wiper arm which, in use, forms part of a wiper apparatus for wiping off material from the surface of a window such as the windscreen of a vehicle.

### 2. Description of the Related Art

Such a wiper arm typically comprises a base portion which is secured to a wiper shaft on an automobile body so as to connect an arm head to the shaft so that it can move in a swingable manner when the shaft is rotated. A top portion of the arm head holds a wiper blade for wiping a window surface when the arm head moves in a reciprocating manner. A conventional wiper arm is formed of an arm shank as the base portion having a substantially Π-shaped cross-section and an arm piece as the top portion having a narrow flat-plate shape for affixing the wiper blade. The parts are formed separately and connected to each other by securing means such as by riveting. However, there has been a problem in such a wiper arm in that a difference in level occurs between the arm shank section and the arm piece section resulting not only in a poor the design, but also in a relatively large number of parts, which reduces assembly efficiency. Therefore, it has been proposed to form the arm shank and the arm piece as a unitary element, for example, in JP-U-4-34160.

In this case, the wiper arm is formed by bending a plate-shaped material. That is, side-pieces continuing from both sides of the arm shank are folded to abut the bottom-piece portion so as to form the arm piece having a substantially flat-plate shape.

Also, the wiper arm must have a spring device interposed between the arm shank and the arm head so that the top portion to which the wiper blade is attached is urged toward the window surface. In the above-described example, a plate for receiving the spring device is sandwiched between both side pieces and the bottom piece in the base portion side of the arm piece, and the spring device is attached thereto via the plate, so that the load of the spring device acting on the arm piece is received on the portion reinforced by the plate.

However, since a region, in which both side pieces are simply bent (crushed) so as to be folded over to abut the bottom-piece portion in a flat shape is formed between the portion for attaching the wiper blade in the top portion of the arm piece and the portion in which the above-mentioned plate is clamped, the strength of this region is lower than that of the clamping portion of the plate. Therefore, in the region where is not clamped by the plate or a boundary portion between the region and the clumped portion, the wire arm itself is prone to be bent when a large load is exerted on the wiper blade. There is a problem thereon to be solved by the present invention.

DE-A-19651856 describes a wiper arm which has a channel-shaped base end portion formed by bending a flat plate and a top end formed by folding back the sides of its channel shape so that the thickness is more than twice the thickness of the flat plate.

### SUMMARY OF THE INVENTION

Accordingly, the present invention has been made so as to solve the problem. According to the present invention there is provided a wiper arm for affixing a wiper blade thereto for wiping a window surface, said wiper arm comprising:
a base end portion of generally channel-shaped cross-section, comprising a bottom surface portion called bottom-piece portion and two side portions which, in use, opens toward the window surface, said base end portion having been formed by bending a flat plate; and
a top end portion having folded-over portions formed by folding back its sides of the channel shape continuously from said base end portion,
wherein the thickness of said top end portion in its folded state is set to be at least or more than twice the thickness of the flat plate, characterised in that
a gap is formed between the bottom-piece portion continuously from the bottom surface portion of the base end portion and the folded-over portions, and notch portions for admitting and draining coating liquid through this gap are formed at juxtaposed portions of the folded-over portions so as to form a single notch when folded back portions are bent and butted together.

With these features, the rigidity of the wiper arm in the longitudinal direction of the arm is improved.

In a wiper arm according to the present invention, the top end portion of the wiper arm is set to be more than twice the thickness of the flat plate by laterally curving a bottom-piece portion of the top end portion which opposes the window surface.

Furthermore, in a wiper arm according to the present invention, the top end portion of the wiper arm is formed to have a thickness more than twice the thickness of the flat plate by forming a gap between the bottom-piece portion of said top end portion and folded-over portions extending from both sides of the bottom piece portion.

In a wiper arm according to the present invention, preferably, the top end portion of the wiper arm is formed to have a thickness more than twice the thickness of the flat plate by respectively bending folded-over portions into a cylindrical shape.

Furthermore, in a wiper arm according to the present invention, the thickness of the top end portion of the wiper arm is set to be more than twice the thickness of the flat plate, except in a region for attaching the wiper blade at an which is extreme end portion of the top end portion.

### BRIEF DESCRIPTION OF THE DRAWINGS

Fig. 1A is a plan view of a wiper arm to which a wiper blade is attached, and Fig. 1B is a side view of the wiper blade;
Fig. 2A is a plan view, and Fig.2B is a sectional side view showing a state in which a wiper arm is connected to an arm head;
Fig. 3A is a plan view, and Fig. 3B is a partly sectional side view of the wiper arm;
Figs. 4A, 4B, and 4C are sectional views on the lines X-X, Y-Y, and Z-Z in Fig. 3B, respectively; and
Figs. 5A, 5B, and 5C are sectional views of an intermediate portion of a wiper arm showing other embodiments, respectively.

### DESCRIPTION OF THE PREFERRED EMBODIMENTS

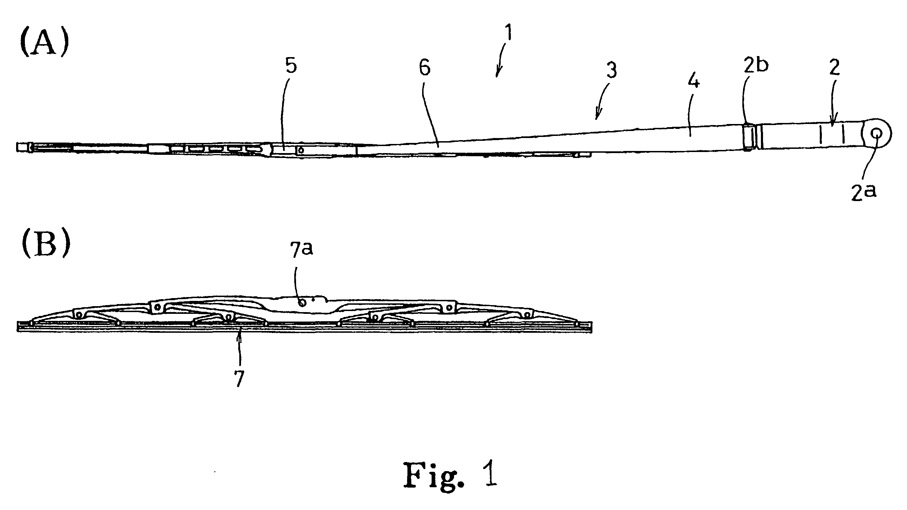

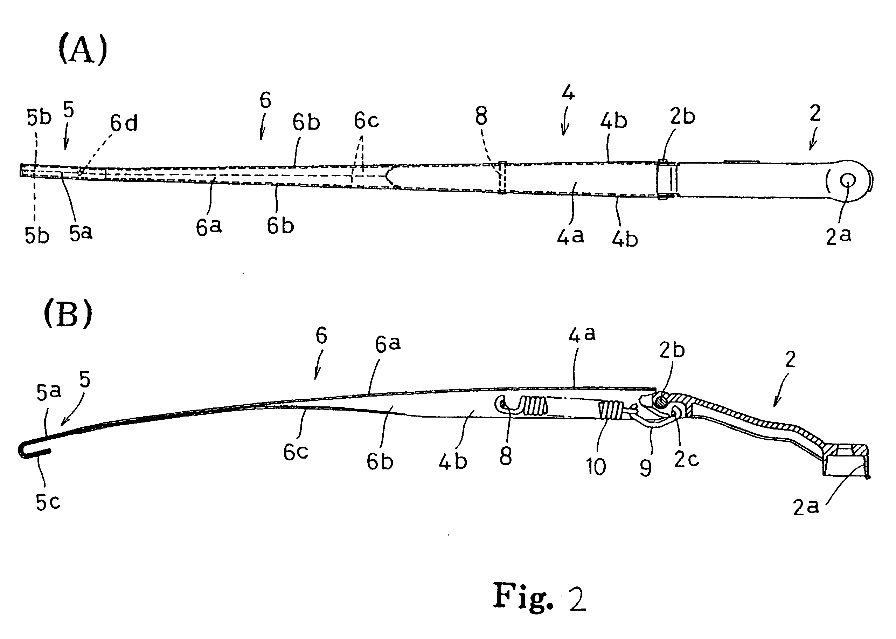

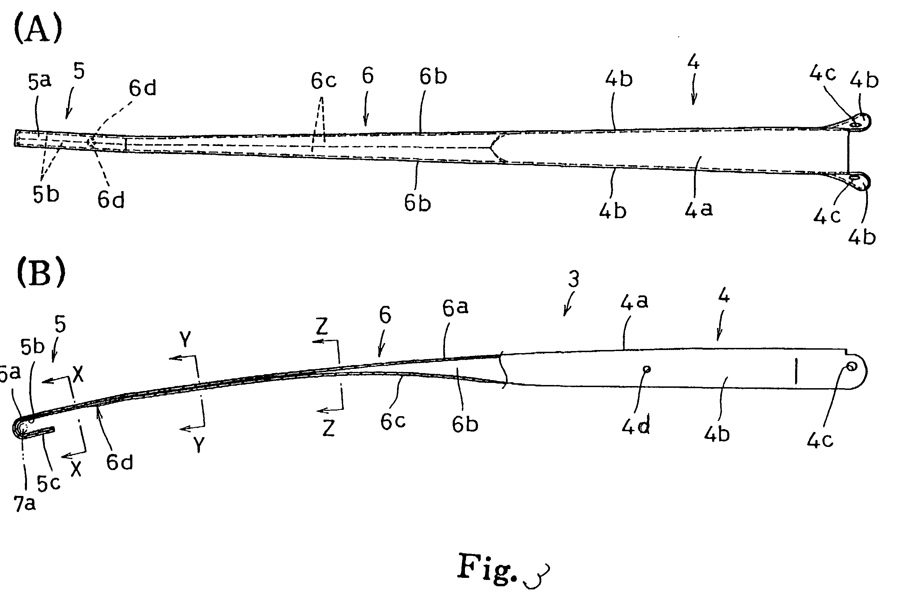

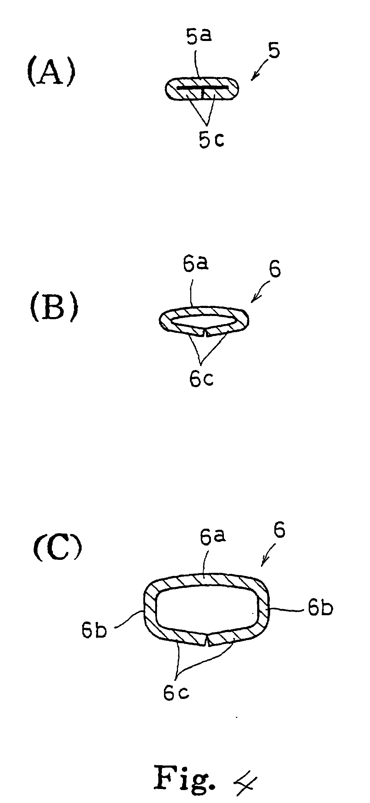

An embodiment of the present invention will now be described with reference to Figs. 1A and 1B, 2A and 2B, 3A and 3B, and 4A, 4B, and 4C.

As shown in the drawings, a wiper device 1 includes an arm head 2 which is to be located adjacent a window surface of a vehicle. The arm head 2 includes at its base portion a through hole 2a which constitutes a wiper-shaft fitting portion 2a which in use engages with a top portion of a wiper-shaft (not shown), which is rotatably journaled by bearings in a vehicle body. A wiper arm 3 is connected to the arm head 2 by a connecting shaft 2b, and which extends in a direction orthogonal to the longitudinal direction of the arm, i.e., in the arm lateral direction, and is rotatably journaled by bearings so that the ends thereof protrude outwardly from the sides of the arm head 2.

The wiper arm 3 has been formed by bending a flat plate-like material and is unitarily formed of a channel-shaped arm shank section 4 for connecting to the top portion of the arm head 2 which is disposed on the base side of the wiper arm 3 and has a substantially U-shaped or Π-shaped cross-section, an arm piece section 5 disposed on the top side of the wiper arm 3 and having a substantially flat-plate shape, and an intermediate section 6 disposed between the arm shank section 3 and the arm piece section 5 and having a reinforced structure. A wiper blade 7 is connected to the arm piece section 5 disposed at the top portion of the wiper arm 3. The arm shank section 4 could alternatively have a substantially C-shaped cross-section.

The arm shank section 4 is mounted so that its open side faces toward the window surface. The section 4 comprises a bottom surface portion 4a (bottom-piece portion) opposing the window surface and side limb portions 4b (equivalent to "both sides" in the present invention) for reinforcing the bending strength in the longitudinal direction, of the arm of the arm shank section 4 and which extend toward the window surface from opposite sides of the bottom surface portion 4a. Through-holes 4c are formed in respective base portions of the upright-piece portions 4b. The protruding portions of the connecting shaft 2b in the arm head 2 extend through the respective through-holes 4c while the arm shank section 4 is applied to the arm head 2 so that the base portion of the bottom surface portion 4a covers the top end portion of the arm head 2. By caulking both ends of the connecting shaft 2b in this state, the arm shank section is rotatably connected to the arm head 2 about the connecting shaft 2b.

In addition, portions in which are formed the through-holes 4c in the upright-piece portions 4b are respectively formed so as to spread or flare out. By swaging and fixing both ends of the connecting shaft 2b while the upright-piece portions 4b in an outwardly extending state are elastically deformed, the upright-piece portions 4b are set to be connected to the arm head 2 so as to overlap the sides of the arm head 2.

The arm piece section 5, which is disposed at the top end of the wiper arm 3, is formed of a bottom surface portion 5a which faces the window surface, and folded-over portions 5b which extend from both sides of the bottom surface portion 5a towards each other. There is substantially no gap between the bottom surface portion 5a and the folded-over portions 5b, that is, the folded-over portions 5b are folded to a flattened state against the bottom surface portion 5a. Thus the thickness of the arm piece section 5 in the direction toward the window surface is set to be approximately twice that of the plate material itself. Furthermore, the top edge portion of the arm piece section 5 is curved toward the window surface to form a hook piece 5c. The length of the arm piece section 5 in the longitudinal direction of the arm is formed to be approximately twice that of the hook piece 5c. Incidentally, the established length is the required minimal stroke for detachably attaching a mounting portion 7a (mounting pin) of the wiper blade 7 thereto.

The intermediate section 6 is formed so as to comprise a bottom surface portion 6a which is effectively a continuation of the bottom surface portions 4a and 5a of the arm shank section 4 and the arm piece section 5, intermediate upright-piece portions 6b which are continuous with the upright-piece portions 4b of the arm shank section 4 and taper down toward the top end so as to be creased only at the top end, and folded-back portions 6c which extend inwardly from both the intermediate upright-piece portions 6b in a folded back state so as to approach and oppose each other, the folded-back portions 6c being spaced from the bottom surface portion 6a by a predetermined spacing. The bottom surface portion 6a is formed to be laterally curved while the folded-back portions 6c are formed to be continuous with the folded-over portions 5b of the arm piece section 5. The thickness in the direction toward the window surface of the intermediate section 6 formed by the bottom surface portion 6a and the folded-back piece portions 6c is set to be more than twice the plate thickness due to the curved bottom surface portion 6a and the spacing between the bottom surface portion 6a and the folded-back portions 6c. This construction increases the rigidity of the intermediate section 6 of the wiper arm 3 in the longitudinal direction of the arm is increased. The wiper arm 3, including the arm shank section 4 and the intermediate section 6, except for the arm piece section 5, is thereby reinforced overall so that improved bending strength in the longitudinal direction of the arm is achieved.

The wiper arm 3 has a slightly curved shape over its length, except along the arm piece 5.

Through-holes 4d have been bored in both of the upright-piece portions 4b towards the top end side of the arm shank section 4. A laterally extending pin shaft 8 is located in through-holes 4d and secured swaging. A pin shaft 2c is fixed laterally at a position of the arm head 2 at the base end side relative to a penetrating portion of the connecting shaft 2b and on the window surface side therefrom as well. One end portion of a hook 9 engages with the pin shaft 2c while the other end portion thereof is retained at one end portion of a spring device 10. By retaining the other end portion of the spring device 10 at the above-mentioned pin shaft 8 of the wiper arm 3, the spring device 10 is arranged so as to urge the top end portion of the wiper arm 3 toward the window surface. Since the spring device 10 in this embodiment is supported by the upright-piece portions 4b of the arm shank section 4 via the pin shaft 8, it is not necessary to provide a reinforcing structure against the load of the spring device 10.

In each of the folded-back portions 6c at the top end portion of the intermediate portion 6, that is, at the boundary portion of the arm piece section 5, semicircular notches 6d are respectively formed so that together they to form a circular notch when these folded-back portions 6c are bent and butted together. Thus, when the wiper arm 3 is being painted, pretreatment liquid or liquid paint can penetrate in between the bottom surface portion 6a and the folded-back portions 6c of the intermediate section 6 through the above-mentioned circular notches 6d, and conversely, excess liquid can be drained therethrough.

In the embodiment of the present invention formed as described above, since the wiper arm 3 is unitarily formed of the arm shank section 4, the arm piece section 5, and the intermediate section 6 disposed therebetween, a wiper arm having superior design without differing levels can be achieved. Furthermore, while only the portion for the stroke for attaching the wiper blade 7 is formed, as the arm piece section 5, in a flattened state of the plate having approximately a double plate thickness, other sections in the base end side are reinforced. That is, the arm shank section 4 is reinforced against bending in the longitudinal direction of the arm by forming the upright-piece portions 4b; and while the bottom surface portion 6a is curved, the thickness through the entire section is to be more than twice the plate thickness by forming a gap between the bottom surface portion 6a and the folded-back portions 6c to thereby reinforce the intermediate section 6, so that the rigidity over substantially the entire length of the wiper arm 3 is increased. Therefore, the bending of the wiper arm 3 due to the load from the wiper blade side, as in a conventional wiper arm in which reinforced portions and unreinforced portions are formed in the longitudinal direction of the arm, can be prevented.

Furthermore, since a gap is formed between the bottom surface portion 6a and the folded-back portions 6c, liquid paint for finishing can penetrate therein via the notch hole 6d formed in the end portion toward the arm piece section 5. Consequently, the liquid can penetrate not only into the gap, but also between the bottom surface portion 5a and the folded-piece portions 5b of the arm piece section 5 at the top end side, enabling rustproofing to be performed.

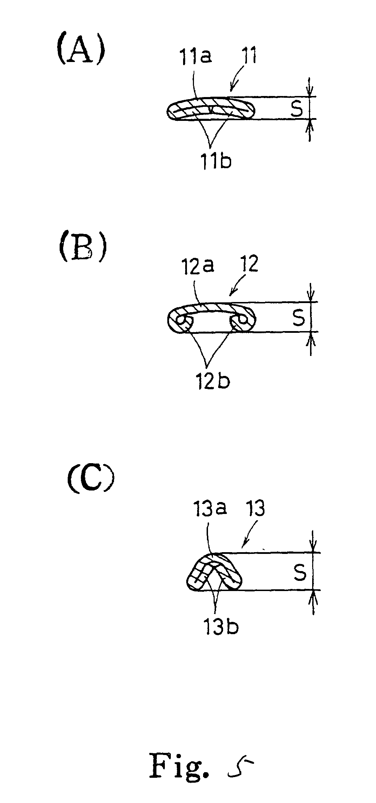

The present invention is of course not limited to the above embodiment regarding the sectional shape of the intermediate section. As shown in Fig. 5A, a bottom surface portion 11a of an intermediate section 11 of the wiper arm may be formed in a curved shape, and folded-over portions 11b may be folded along the curved bottom surface portion 11a, so that the thickness "S" is substantially more than twice that of the plate, thereby increasing its rigidity; as shown in Fig. 5B, while a bottom surface portion 12a of an intermediate section 12 of the wiper arm is formed in a curved shape, folded-over portions 12b may be bent into a cylindrical shape; and as shown in Fig. 5C, while a bottom surface portion 13a of an intermediate section 13 of the wiper arm is folded back to form a folded angle in the longitudinal direction of the arm, folded-over portions 13b may be folded along the inclined bottom surface portion 13a. In any case, the thickness "S" is substantially more than twice that of the plate, thereby increasing the rigidity.

## Claims

1. A wiper arm (3) for affixing a wiper blade (7) thereto for wiping a window surface, said wiper arm (3) comprising:
a base end portion of generally channel-shaped cross-section comprising a bottom surface portion (4a) called bottom-piece portion and two side portions (4b) which, in use, opens toward the window surface, said base end portion having been formed by bending a flat plate; and
a top end portion having folded-over portions (6c) formed by folding back its sides (5b) of the channel shape continuously from said base end portion,
wherein the thickness of said top end portion in its folded state is set to be at least or more than twice the thickness of the flat plate, **characterised in that**
a gap is formed between the bottom-piece portion (6a) continuously from the bottom surface portion of the base end portion and the folded-over portions (6c), and notch portions for admitting and draining coating liquid through this gap are formed at juxtaposed portions of the folded-over portions (6c) so as to form a single notch when folded back portions (6c) are bent and butted together.

2. A wiper arm according to Claim 1, wherein said top end portion of said wiper arm is set to be more than twice the thickness of the flat plate by laterally curving a bottom-piece portion of said top end portion which opposes the window surface.

3. A wiper arm according to any one of Claims 1 and 2, wherein said top end portion of said wiper arm is formed to have a thickness more than twice the thickness of the flat plate by forming a gap between the bottom-piece portion of said top end portion and folded-over portions extending from both sides of the bottom-piece portion.

4. A wiper arm according to any one of Claims 1, 2, and 3, wherein said top end portion of said wiper arm is formed to have a thickness more than twice the thickness of the flat plate by respectively bending folded-over portions into a cylindrical shape.

5. A wiper arm according to any one of Claims 1, 2, 3 and 4, wherein the thickness of said top end portion of said wiper arm is set to be more than twice the thickness of the flat plate, except in a region for attaching the wiper blade which is at an extreme end portion of said top end portion.

## Patentansprüche

1. Wischerarm (3) zum Befestigen eines Wischergummis (7) daran zum Wischen einer Fensteroberfläche, welcher Wischerarm (3) enthält:
einen einen Bodenflächenabschnitt (4a), der Bodenstückabschnitt genannt ist, und zwei Seitenabschnitte (4b) enthaltenden Basisendabschnitt von allgemein kanalförmigem Querschnitt, der sich bei Verwendung zu der Fensteroberfläche hin öffnet, welcher Basisendabschnitt durch Biegen einer flachen Platte geformt ist; und
einen oberen Endabschnitt, der umgebogene Abschnitte (6c) hat, die durch Rückbiegen seiner Seiten (5b) der Kanalform kontinuierlich von dem Basisendabschnitt geformt sind, wobei die Dicke des oberen Endabschnitts in seinem umgebogenen Zustand eingestellt ist, um wenigstens oder mehr als zweimal die Dicke der flachen Platte zu sein, **dadurch gekennzeichnet,**
**dass** zwischen dem Bodenstückabschnitt(6a) kontinuierlich von dem Bodenflächenabschnitt des Basisendabschnittes und den umgebogenen Abschnitten (6c) ein Spalt gebildet ist, und Kerbenabschnitte zum Einlassen und Ablaufen von Beschichtungsflüssigkeit durch diesen Spalt an nebeneinander liegenden Abschnitten der umgebogenen Abschnitte (6c) ausgebildet sind, um eine einzelne Kerbe zu bilden, wenn zurückgebogene Abschnitte (6c) gebogen und aneinandergefügt sind.

2. Wischerarm nach Anspruch 1, wobei der obere Endabschnitt des Wischerarms durch seitliches Biegen eines Bodenstückabschnittes des oberen Endabschnittes, der der Scheibenoberfläche gegenüberliegt, eingestellt ist, um mehr als zweimal die Dicke der flachen Platte zu haben.

3. Wischerarm nach einem der Ansprüche 1 und 2, wobei der obere Endabschnitt des Wischerarms durch Ausbilden eines Spaltes zwischen dem Bodenstückabschnitt des oberen Endabschnittes und umgebogenen Abschnitten, die sich von beiden Seiten des Bodenstückabschnittes erstrecken geformt ist, um eine Dicke von mehr als zweimal der Dicke der flachen Platte zu haben.

4. Wischerarm nach einem der Ansprüche 1, 2 und 3, wobei der obere Endabschnitt des Wischerarms durch entsprechendes Biegen von umgebogenen Abschnitten zu einer zylindrischen Form ausgebildet ist, um eine Dicke von mehr als zweimal der Dicke der flachen Platte zu haben.

5. Wischerarm nach einem der Ansprüche 1, 2, 3 und 4, wobei die Dicke des oberen Endabschnittes des Wischerarms eingestellt ist, um mehr als zweimal die Dicke der flachen Platte zu sein, mit Ausnahme in einer Region zum Anbringen des Wischergummis an einem äußersten Endabschnitt des oberen Endabschnittes.

## Revendications

1. Un bras d'essuie-glace (3) pour y fixer une lame d'essuie-glace (7) afin d'essuyer la surface d'une vitre, ledit bras d'essuie-glace (3) comprenant :
une partie d'extrémité de base de section transversale de forme générale en U, comprenant une partie de surface inférieure (4a) appelée partie de pièce inférieure et deux parties latérales (4b) qui, en service, débouchent en direction de la surface de la vitre, ladite partie d'extrémité de base ayant été formée par pliage d'une plaque plate; et
une partie d'extrémité de dessus présentant des parties repliées (6c) formée en repliant ses côtés (5b) de la forme en U continûment depuis ladite partie d'extrémité de base,
où l'épaisseur de ladite partie d'extrémité de dessus dans son état plié est réglée pour être d'au moins deux fois ou davantage l'épaisseur de la plaque plate, **caractérisée en ce que**
un intervalle est formé entre la partie de pièce inférieure (6a) continûment depuis la partie de surface inférieure de la partie d'extrémité de base et des parties repliées (6c), et des parties encochées pour l'admission et l'évacuation de liquide de recouvrement à travers cet intervalle sont formées au niveau de parties juxtaposées des parties repliées (6c) de manière à former une encoche unique lorsque les parties repliées (6c) sont pliées et aboutées.

2. Un bras d'essuie-glace selon la revendication 1, dans lequel ladite partie d'extrémité de dessus dudit bras d'essuie-glace est réglée pour être de plus de deux fois l'épaisseur de la plaque plate en courbant latéralement une partie de pièce inférieure de ladite partie d'extrémité de dessus qui s'oppose à la surface de la vitre.

3. Un bras d'essuie-glace selon une quelconque des revendications 1 et 2, dans lequel ladite partie d'extrémité de dessus dudit bras d'essuie-glace est formée pour présenter une épaisseur de plus de deux fois l'épaisseur de la plaque plate en formant un intervalle entre la partie de pièce inférieure de ladite partie d'extrémité de dessus et des parties repliées s'étendant depuis les deux côtés de la partie de pièce inférieure.

4. Un bras d'essuie-glace selon une quelconque des revendications 1, 2 et 3, dans lequel ladite partie d'extrémité de dessus dudit bras d'essuie-glace est formée pour présenter une épaisseur de plus de deux fois l'épaisseur de la plaque plate en pliant respectivement des parties repliées en une forme cylindrique.

5. Un bras d'essuie-glace selon une quelconque des revendications 1, 2, 3 et 4, dans lequel l'épaisseur de ladite partie d'extrémité de dessus dudit bras d'essuie-glace est réglée pour être de plus de deux fois l'épaisseur de la plaque plate, sauf dans une zone prévue pour la fixation de la lame d'essuie-glace qui se trouve au niveau d'une partie d'extrémité terminale de ladite partie d'extrémité de dessus.
